# DEMANDE DE BREVET EUROPEEN

(11) **EP 2 039 909 A1**
(43) Date de publication de la demande: **25.03.2009**
(21) Numéro de dépôt: 08163625.0
(22) Date de dépôt: 03.09.2008
(51) Int. Cl.: F02B 37/12, F02D 21/08, F02D 41/00, F02M 25/07

(54) **Dispositif et procède de recirculation des gaz d'échappement dans un moteur**

(30) Priorité: 24.09.2007 FR 0757799
(71) Demandeur: Peugeot Citroën Automobiles SA, 78943 Vélizy-Villacoublay Cedex (FR)
(72) Inventeur: Hennion, Cedrick, 75005 Paris (FR); Revol, Emmanuel, 38470 Varacieux (FR)
(74) Mandataire: Ménès, Catherine

(57) **Abrégé**

Ce dispositif de recirculation des gaz d'échappement en entrée d'un moteur (1) à combustion interne à allumage par compression équipé d'un turbocompresseur (2) comprend un circuit (C) de recirculation des gaz d'échappement en entrée du moteur et des moyens (6) formant vanne de régulation du débit des gaz d'échappement dans le circuit (C). Ce dispositif comprend en outre des moyens (7) de commande de l'ouverture des moyens (6) formant vanne de régulation selon une loi de commande d'ouverture variable en fonction de l'angle du vilebrequin du moteur (1) au cours de chaque cycle de travail de chaque cylindre du moteur (1).

## Description

La présente invention a trait à un dispositif et à un procédé de recirculation des gaz d'échappement en entrée d'un moteur à combustion interne à allumage par compression équipé d'un turbocompresseur. L'invention a également trait à un véhicule automobile comprenant un moteur à combustion interne à allumage par compression équipé d'un turbocompresseur.

Il est connu que la puissance délivrée par un moteur à combustion interne à allumage par compression, ou moteur Diesel, dépend de la quantité d'air admise dans la chambre de combustion de chaque cylindre du moteur, cette quantité d'air étant elle-même fonction de la densité de l'air en entrée de la chambre de combustion. Il est courant, en vue d'augmenter la puissance d'un moteur de cylindrée donnée, d'utiliser un système de suralimentation comprenant des moyens de compression de l'air avant son admission dans le cylindre. Ces moyens de compression comprennent classiquement un turbocompresseur, dont une portion de turbine récupère une partie de l'énergie contenue dans les gaz d'échappement du moteur, cette énergie étant transmise à une portion de compresseur du turbocompresseur qui l'utilise pour augmenter la densité de l'air d'admission dans le moteur. Un tel turbocompresseur de suralimentation a l'inconvénient d'augmenter la pression en sortie du moteur, laquelle s'oppose à la remontée du piston de chaque cylindre dans les phases d'échappement. Il en résulte une perte d'une partie de l'énergie libérée lors de la combustion, de telles pertes étant dénommées « pertes par pompage ».

Par ailleurs, il est connu de WO-A-2004/033888 de prévoir un système de turbocompresseurs à impulsion pour limiter la pression en sortie d'un moteur Diesel. Dans ce système, chaque cylindre du moteur est associé à un turbocompresseur à impulsion individuel, qui lui est dédié, chaque turbocompresseur à impulsion étant prévu pour utiliser exclusivement l'énergie contenue dans les gaz d'échappement du cylindre auquel il est associé. Comme les cycles de travail des différents cylindres sont déphasés, la récupération d'énergie par les portions de turbine des turbocompresseurs individuels est étalée temporellement. Dès lors, l'augmentation de la pression en sortie du moteur et le risque de pertes d'énergie par pompage sont limités. Toutefois, un tel système de turbocompresseurs à impulsion nécessite la fourniture d'un turbocompresseur individuel pour chaque cylindre ou groupe de cylindres de même phasage, ce qui augmente fortement le poids et l'encombrement de l'ensemble moteur.

C'est à ces inconvénients qu'entend plus particulièrement remédier l'invention en proposant un dispositif de recirculation des gaz d'échappement en entrée d'un moteur à combustion interne à allumage par compression équipé d'un turbocompresseur, ce dispositif permettant, d'une part, de minimiser les pertes par pompage du moteur pour une quantité d'énergie donnée récupérée par le turbocompresseur et, d'autre part, de conserver un poids et un encombrement limités de l'ensemble moteur comprenant le moteur, le turbocompresseur et le dispositif de recirculation.

A cet effet, l'invention a pour objet un dispositif de recirculation des gaz d'échappement en entrée d'un moteur à combustion interne à allumage par compression équipé d'un turbocompresseur, ce dispositif comprenant un circuit de recirculation des gaz d'échappement en entrée du moteur et des moyens formant vanne de régulation du débit des gaz d'échappement dans le circuit de recirculation, caractérisé en ce qu'il comprend en outre des moyens de commande de l'ouverture des moyens formant vanne de régulation selon une loi de commande d'ouverture variable en fonction de l'angle du vilebrequin du moteur au cours de chaque cycle de travail de chaque cylindre du moteur.

Selon d'autres caractéristiques avantageuses d'un dispositif de recirculation des gaz d'échappement conforme à l'invention, prises isolément ou selon toutes les combinaisons techniquement possibles :
- la loi de commande d'ouverture des moyens formant vanne de régulation est telle que, pour chaque cycle de travail de chaque cylindre du moteur, lors de la phase d'échappement du cylindre, les moyens formant vanne de régulation sont fermés au début de la phase d'échappement du cylindre et ouverts au cours de la remontée du piston du cylindre, pour une position du piston intermédiaire entre le point mort bas et le point mort haut de sa course ;
- la loi de commande d'ouverture des moyens formant vanne de régulation est une loi de type « créneau » en fonction de l'angle du vilebrequin du moteur ;
- chaque cylindre du moteur fonctionne selon un cycle de travail à quatre temps et la loi de commande d'ouverture des moyens formant vanne de régulation est une loi de type « créneau » en fonction de l'angle du vilebrequin comportant un créneau d'ouverture des moyens formant vanne de régulation au cours de chacune des quatre phases du cycle ;
- les moyens formant vanne de régulation du débit des gaz d'échappement dans le circuit comprennent un obturateur dont l'ouverture et la fermeture sont commandés par les moyens de commande selon une loi de commande d'ouverture variable en fonction de l'angle du vilebrequin du moteur au cours de chaque cycle de travail de chaque cylindre du moteur ;
- les moyens formant vanne de régulation du débit des gaz d'échappement dans le circuit comprennent une vanne, qui est à section variable pour le contrôle de la recirculation des gaz d'échappement mais à section constante au cours de chaque cycle de travail de chaque cylindre du moteur ;
- pour chaque cylindre du moteur, la loi de commande d'ouverture des moyens formant vanne de régulation est identique d'un cycle de travail du cylindre à un autre ;
- il comprend des moyens de phasage de la loi de commande d'ouverture des moyens formant vanne de régulation sur le cycle de travail de chaque cylindre du moteur ;
- pour chaque cylindre du moteur, la loi de commande d'ouverture des moyens formant vanne de régulation comporte l'ouverture des moyens formant vanne de régulation sur une plage angulaire d'angle du vilebrequin variable d'un cycle de travail du cylindre à un autre ;
- pour chaque cylindre du moteur, la loi de commande d'ouverture des moyens formant vanne de régulation comporte, au moins pour la phase d'échappement de chaque cycle de travail du cylindre, l'ouverture des moyens formant vanne de régulation pour une première valeur de l'angle du vilebrequin et la fermeture des moyens formant vanne de régulation pour une deuxième valeur de l'angle du vilebrequin, ces première et deuxième valeurs de l'angle du vilebrequin étant variables d'un cycle de travail du cylindre à un autre.

L'invention a également pour objet un procédé de recirculation des gaz d'échappement en entrée d'un moteur à combustion interne à allumage par compression équipé d'un turbocompresseur, ce moteur étant muni d'un circuit de recirculation des gaz d'échappement en entrée du moteur et de moyens formant vanne de régulation du débit des gaz d'échappement dans le circuit de recirculation, caractérisé en ce que, pour chaque cycle de travail de chaque cylindre du moteur, lors de la phase d'échappement du cylindre, il comprend des étapes dans lesquelles :
- on maintient les moyens formant vanne de régulation fermés au début de la phase d'échappement du cylindre ;
- on ouvre les moyens formant vanne de régulation au cours de la remontée du piston du cylindre, pour une position du piston intermédiaire entre le point mort bas et le point mort haut de sa course.

Enfin, l'invention a pour objet un véhicule automobile, du type comprenant un moteur à combustion interne à allumage par compression équipé d'un turbocompresseur, ce véhicule comprenant un dispositif tel que décrit ci-dessus pour la recirculation des gaz d'échappement en entrée du moteur.

Les caractéristiques et avantages de l'invention apparaîtront dans la description qui va suivre de trois modes de réalisation d'un dispositif et d'un procédé de recirculation des gaz d'échappement conformes à l'invention, donnée uniquement à titre d'exemple et faite en se référant aux dessins annexés dans lesquels :
- la figure 1 est un schéma synoptique de la structure et du fonctionnement d'un ensemble moteur comprenant un moteur Diesel, un turbocompresseur et un dispositif de recirculation des gaz d'échappement conforme à l'invention ;
- la figure 2 est un diagramme, s'étalant sur quatre courses du piston d'un cylindre du moteur Diesel à quatre temps appartenant à l'ensemble moteur de la figure 1, qui montre, en fonction de l'angle du vilebrequin du moteur, la levée des soupapes d'admission et d'échappement du cylindre, ainsi que la loi de commande d'ouverture des moyens formant vanne de régulation du débit des gaz d'échappement dans le circuit de recirculation d'un dispositif de recirculation conforme à un premier mode de réalisation de l'invention ;
- la figure 3 est un diagramme analogue au diagramme de la figure 2 pour un dispositif de recirculation des gaz d'échappement conforme à un deuxième mode de réalisation de l'invention ;
- la figure 4 est un diagramme analogue au diagramme de la figure 2 pour un dispositif de recirculation des gaz d'échappement conforme à un troisième mode de réalisation de l'invention ; et
- la figure 5 est un diagramme, s'étalant sur quatre courses du piston d'un cylindre du moteur Diesel à quatre temps appartenant à l'ensemble moteur de la figure 1, qui montre, en fonction de l'angle du vilebrequin du moteur, d'une part, la pression en sortie du moteur pour une recirculation des gaz d'échappement conforme à l'état de la technique et, d'autre part, la pression en sortie du moteur avec un dispositif de recirculation des gaz d'échappement conforme au deuxième et au troisième modes de réalisation de l'invention.

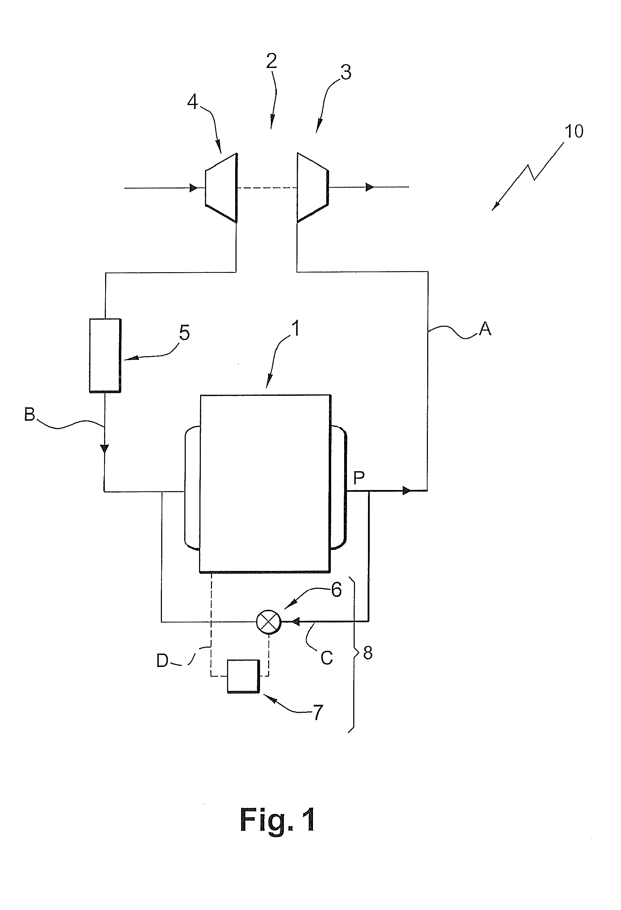

L'ensemble moteur 10 représenté sur la figure 1 comprend un moteur 1 à combustion interne à allumage par compression, en particulier un moteur de type Diesel destiné à équipé un véhicule. Le moteur 1 considéré est un moteur conventionnel fonctionnant selon un cycle de travail à quatre temps, à savoir l'admission, la compression, la combustion et l'échappement. Le moteur 1 est équipé d'un turbocompresseur 2, dont une portion de turbine 3 est raccordée à une ligne A d'échappement du moteur 1 et dont une portion de compresseur 4 est raccordée à une ligne B d'admission d'air dans le moteur 1. La ligne d'admission B est équipée d'un échangeur thermique 5, propre à refroidir l'air suralimenté en provenance de la portion de compresseur 4.

Le moteur 1 est également associé à un dispositif 8 de recirculation des gaz d'échappement (ou EGR) en entrée du moteur 1. Le dispositif 8 comprend un circuit C de recirculation de gaz d'échappement en entrée du moteur 1 et une vanne EGR 6 de régulation du débit des gaz d'échappement dans le circuit C. Le dispositif 8 comprend en outre une unité de commande 7, propre à piloter la vanne EGR 6 à partir d'informations issues du moteur 1, selon une loi de commande d'ouverture variable en fonction de l'angle du vilebrequin du moteur 1 au cours de chaque cycle de travail de chaque cylindre du moteur 1. A cet effet, l'unité de commande 7 est reliée au moteur 1 et à la vanne EGR 6, cette liaison étant représentée par le circuit D sur la figure 1.

La loi de commande d'ouverture de la vanne EGR 6, variable au cours de chaque cycle de travail de chaque cylindre du moteur 1, est optimisée de manière à limiter les pertes par pompage du moteur 1. En particulier on recherche, pour chaque cylindre du moteur 1, une configuration de l'ensemble moteur 10 dans la phase d'échappement du cylindre permettant, d'une part, de fournir rapidement une grande quantité d'énergie à la portion de turbine 3 et, d'autre part, de minimiser la pression en sortie du cylindre, c'est-à-dire la pression dans le collecteur d'échappement, pendant la remontée du piston du cylindre.

L'énergie récupérée par la portion de turbine 3 dépend du taux de détente de la turbine et du débit instantané des gaz d'échappement dans la ligne d'échappement A du moteur 1. Or, le débit instantané des gaz d'échappement du moteur 1 est maximal en début de phase d'échappement. Dès lors, il est avantageux de fournir une configuration de l'ensemble moteur 10 qui, pendant la phase d'échappement du cylindre, permet un fort débit de gaz d'échappement dans la ligne d'échappement A dans un premier temps, au début de la phase d'échappement, et une minimisation de la pression dans le collecteur d'échappement du cylindre dans un deuxième temps, au cours de la remontée du piston du cylindre, pour une position du piston intermédiaire entre le point mort bas PMB et le point mort haut PMH de sa course dans le cylindre.

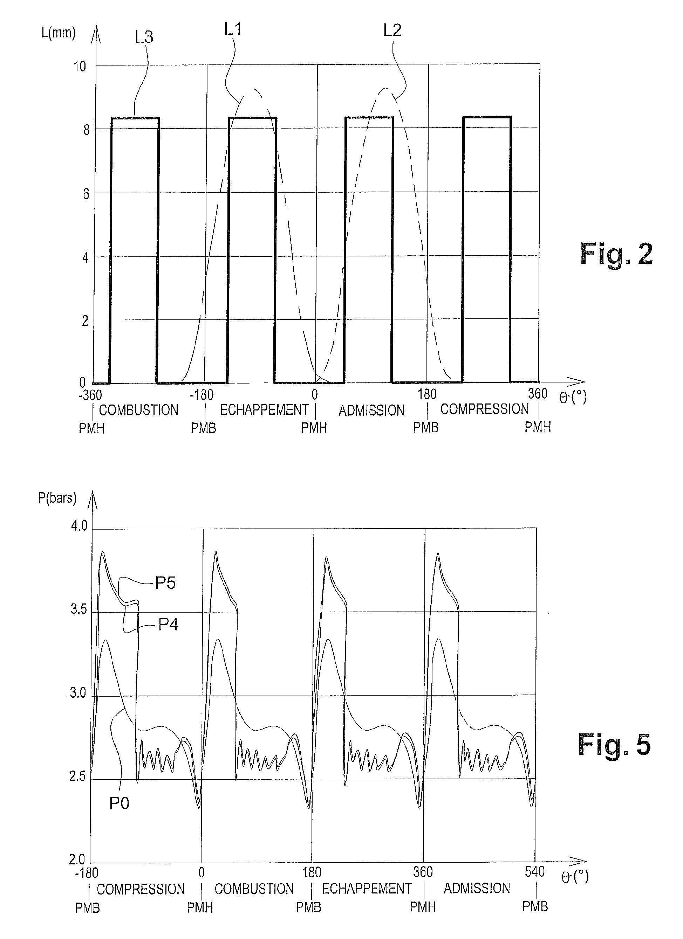

Une configuration adaptée de l'ensemble moteur 10 lors de la phase d'échappement du cylindre est obtenue, selon l'invention, en pilotant l'ouverture de la vanne EGR 6 au moyen de l'unité de commande 7 selon une loi de commande d'ouverture optimisée, des exemples de lois de commande L3, L4 (L'4) et L5 (L'5) étant montrés respectivement sur les figures 2, 3 et 4.

Comme visible sur ces figures, chaque loi de commande L3, L4 (L'4) ou L5 (L'5) d'ouverture de la vanne EGR 6 du dispositif 8 conforme à l'invention est telle que, pour chaque cycle de travail du cylindre, lors de la phase d'échappement du cylindre, un procédé de recirculation des gaz d'échappement en entrée du moteur 1 comprend des étapes dans lesquelles :

Dans un premier temps, au début de la phase d'échappement du cylindre, la vanne EGR 6 est maintenue fermée, de telle sorte qu'un petit volume est créé entre le cylindre et la portion de la turbine 3. Il est ainsi possible d'obtenir une augmentation rapide de la pression des gaz d'échappement en entrée de la portion de turbine 3, de telle sorte que l'énergie récupérée par la portion de turbine 3 est maximisée. Cette énergie récupérée par la portion de turbine 3 peut également être améliorée en équipant les cylindres du moteur 1 de soupapes d'échappement très perméables, permettant le passage d'un fort débit de gaz d'échappement vers la portion de turbine 3 dès le début de la phase d'échappement.

Dans un deuxième temps, lorsque la portion de turbine 3 a récupéré l'énergie nécessaire à une suralimentation efficace du moteur 1 par la portion de compresseur 4, la vanne EGR 6 est basculée en configuration ouverte. Plus précisément, l'ouverture de la vanne EGR 6 intervient lors de la remontée du piston du cylindre, pour une position du piston intermédiaire entre le point mort bas PMB et le point mort haut PMH de sa course. L'ouverture de la vanne EGR 6 permet de créer un grand volume à la sortie du cylindre, de sorte que la pression en sortie du moteur 1 diminue rapidement et ne gêne pas la remontée du piston du cylindre.

La vanne EGR 6 est ensuite rebasculée en configuration fermée, préalablement à la fin de la phase d'échappement du cylindre, lorsque le débit des gaz d'échappement a fortement diminué.

Comme illustré sur les figures 2 à 4 avec les lois de commande L3, L4 (L'4) et L5 (L'5), la loi de commande de l'ouverture de la vanne EGR 6, qui est variable en fonction de l'angle du vilebrequin du moteur 1 au cours de chaque cycle de travail de chaque cylindre du moteur 1, peut présenter différents profils. Le diagramme de la figure 2 représente l'évolution des levées L1 de la soupape d'échappement et L2 de la soupape d'admission d'un cylindre du moteur 1 en fonction de l'angle θ du vilebrequin du moteur 1, ainsi qu'une loi L3 de commande de l'ouverture de la vanne EGR 6 en fonction de l'angle θ, pour un dispositif de recirculation conforme à un premier mode de réalisation de l'invention. La loi L3 est une loi de type « créneau » en fonction de l'angle θ et comporte un créneau d'ouverture de la vanne EGR 6 au cours de chacune des quatre phases du cycle de travail du cylindre, de sorte qu'une même loi L3 de commande d'ouverture de la vanne EGR 6 permet l'optimisation de la configuration de l'ensemble moteur 10 pour la phase d'échappement de chacun des cylindres du moteur. La loi L3 de ce premier mode de réalisation est telle que, pour chaque cylindre du moteur 1, la loi de commande d'ouverture de la vanne EGR 6 est identique d'un cycle de travail du cylindre à un autre.

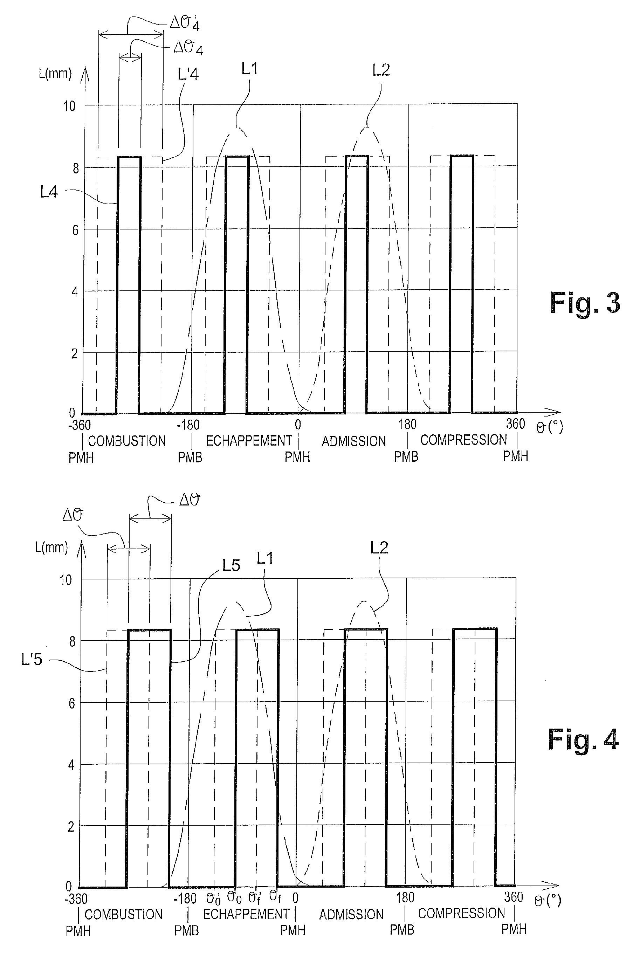

En variante, et comme montré sur les diagrammes des figures 3 et 4, la loi de commande d'ouverture de la vanne EGR 6 peut être, pour chaque cylindre du moteur 1, différente d'un cycle de travail du cylindre à un autre. La loi de commande est alors phasée sur le cycle de travail du moteur 1, grâce à des informations transmises entre le moteur 1 et l'unité de commande 7 dans le circuit D. Il est ainsi possible d'adapter au mieux la loi de commande de l'ouverture de la vanne EGR 6, pour chaque cycle de travail de chaque cylindre du moteur 1.

De manière analogue à la figure 2, les diagrammes des figures 3 et 4 représentent l'évolution des levées L1 de la soupape d'échappement et L2 de la soupape d'admission d'un cylindre du moteur 1 en fonction de l'angle θ du vilebrequin du moteur 1. De plus, le diagramme de la figure 3 montre une loi L4 (L'4) de commande de l'ouverture de la vanne EGR 6 pour un dispositif de recirculation conforme à un deuxième mode de réalisation de l'invention, alors que le diagramme de la figure 4 montre une loi L5 (L'5) de commande de l'ouverture de la vanne EGR 6 pour un dispositif de recirculation conforme à un troisième mode de réalisation de l'invention.

La loi L4 (L'4) a la spécificité de comporter, pour chaque phase du cycle du cylindre, l'ouverture de la vanne EGR 6 sur une plage angulaire d'angle θ variable d'un cycle de travail du cylindre à un autre. En particulier, comme montré sur la figure 3, au cours d'un premier cycle du cylindre, la vanne EGR 6 est ouverte sur une plage Δθ₄ d'angle θ plus faible que la plage angulaire Δθ'₄ sur laquelle la vanne EGR 6 est ouverte dans un autre cycle.

La loi L5 (L'5) a quant à elle la spécificité de fournir, au moins pour la phase d'échappement de chaque cycle du cylindre, l'ouverture de la vanne EGR 6 pour une première valeur de l'angle θ du vilebrequin et la fermeture de la vanne EGR 6 pour une deuxième valeur de l'angle θ du vilebrequin, ces première et deuxième valeurs de l'angle θ étant variables d'un cycle de travail du cylindre à un autre, alors que la plage angulaire d'angle θ sur laquelle la vanne EGR 6 est ouverte est constante d'un cycle à un autre. Comme montré sur la figure 4, au cours d'un premier cycle du cylindre, la vanne EGR 6 est ouverte au cours de la phase d'échappement pour une valeur θ₀ de l'angle θ et fermée pour une valeur θ_{f} de l'angle θ, les valeurs θ₀ et θ_{f} étant séparées par une plage angulaire Δθ d'angle θ. Au cours d'un cycle ultérieur du cylindre, la vanne EGR 6 est ouverte au cours de la phase d'échappement pour une valeur θ'₀ de l'angle θ différente de la valeur θ₀ et fermée pour une valeur θ'_{f} de l'angle θ différente de la valeur θ_{f}, les valeurs θ'₀ et θ'_{f} étant séparées par une même plage angulaire Δθ que les valeurs θ₀ et θ_{f}.

En pratique, la vanne EGR 6 du dispositif de recirculation 8 conforme à l'invention peut être formée par l'association d'une vanne EGR classique, c'est-à-dire présentant une section qui est variable pour le contrôle de l'EGR mais qui reste constante au cours d'un cycle de travail du moteur 1, et d'un obturateur dont l'ouverture et la fermeture sont commandés par l'unité de commande 7 selon une loi de commande d'ouverture variable en fonction de l'angle du vilebrequin du moteur 1 au cours de chaque cycle de travail de chaque cylindre du moteur 1, par exemple choisie parmi les lois de commande L3, L4 (L'4) ou L5 (L'5).

Quelle que soit la loi de commande L3, L4 (L'4) ou L5 (L'5) d'ouverture de la vanne EGR 6 mise en oeuvre par l'unité de commande 7, un dispositif de recirculation 8 conforme à l'invention permet d'obtenir une variation de volume importante en sortie des cylindres du moteur 1, de sorte que la pression P des gaz d'échappement en sortie du moteur 1 évolue de manière adaptée, comme montré sur la figure 5. Sur cette figure, les courbes P4 et P5 montrent l'évolution de la pression P au cours d'un cycle d'un cylindre du moteur 1, lorsque l'unité de commande 7 pilote l'ouverture de la vanne EGR 6 selon une loi de commande L4 (L'4) ou L5 (L'5), alors que la courbe P0 montre l'évolution de la pression P au cours d'un cycle d'un cylindre d'un moteur équipé d'une boucle d'air conforme à l'état de la technique. Il ressort de ces courbes que la valeur de la pression P obtenue au début de la phase d'échappement de chaque cylindre du moteur 1 équipé du dispositif de recirculation 8 selon l'invention est plus élevée que la valeur de la pression P obtenue avec une boucle d'air classique. Il en résulte une énergie maximale récupérée par la portion de turbine 3 avec le dispositif 8. De plus, l'ouverture de la vanne EGR 6 du dispositif 8 conforme à l'invention au cours de la remontée du piston entraîne une chute brutale de la valeur de la pression P, comme montré par les courbes P4 et P5, pour une position du piston intermédiaire entre le point mort bas PMB et le point mort haut PMH de sa course. La pression P ne gêne alors pas la remontée du piston du cylindre, de sorte que les pertes par pompage du moteur 1 sont limitées. Le dispositif de recirculation 8 conforme à l'invention permet ainsi d'optimiser l'énergie récupérée par la portion de turbine 3 du turbocompresseur 2 équipant le moteur 1 et de limiter les pertes par pompage du moteur, sans modification du poids ou de l'encombrement de l'ensemble moteur 10 par rapport à un ensemble moteur de l'état de la technique.

L'invention n'est pas limitée aux exemples décrits et représentés. En particulier, un dispositif de recirculation des gaz d'échappement selon l'invention est applicable à tout type de moteur à combustion interne à allumage par compression, quels que soient le nombre de cylindres du moteur ou le nombre de temps du cycle de travail de chaque cylindre.

Par ailleurs, la loi de commande d'ouverture variable des moyens formant vanne de régulation du débit des gaz d'échappement dans le circuit de recirculation d'un dispositif de recirculation selon l'invention peut être une loi de tout type autre qu'une loi de type créneau, la structure des moyens formant vanne de régulation du débit des gaz d'échappement dans le circuit de recirculation étant adaptée en conséquence. De plus, pour chaque cylindre du moteur, il est possible de faire varier des paramètres autres que la plage angulaire sur laquelle les moyens formant vanne de régulation sont ouverts, ou que les valeurs limites de l'angle vilebrequin pour lesquelles les moyens formant vanne de régulation sont basculés en configuration ouverte ou fermée, d'un cycle de travail du cylindre à un autre. En particulier, une loi de commande d'ouverture des moyens formant vanne de régulation peut comprendre à la fois une variation de la plage angulaire et des valeurs limites de l'angle vilebrequin d'un cycle de travail du cylindre à un autre.

## Revendications

1. Dispositif de recirculation des gaz d'échappement en entrée d'un moteur (1) à combustion interne à allumage par compression équipé d'un turbocompresseur (2), ce dispositif comprenant un circuit (C) de recirculation des gaz d'échappement en entrée du moteur et des moyens (6) formant vanne de régulation du débit des gaz d'échappement dans le circuit (C), **caractérisé en ce qu'**il comprend en outre des moyens (7) de commande de l'ouverture des moyens (6) formant vanne de régulation selon une loi de commande (L3 ; L4, L'4 ; L5, L'5) d'ouverture variable en fonction de l'angle (θ) du vilebrequin du moteur (1) au cours de chaque cycle de travail de chaque cylindre du moteur (1).

2. Dispositif selon la revendication 1, **caractérisé en ce que** la loi de commande (L3 ; L4, L'4 ; L5, L'5) d'ouverture des moyens (6) formant vanne de régulation est telle que, pour chaque cycle de travail de chaque cylindre du moteur, lors de la phase d'échappement du cylindre, les moyens (6) formant vanne de régulation sont fermés au début de la phase d'échappement du cylindre et ouverts au cours de la remontée du piston du cylindre, pour une position du piston intermédiaire entre le point mort bas (PMB) et le point mort haut (PMH) de sa course.

3. Dispositif selon l'une quelconque des revendications 1 ou 2, **caractérisé en ce que** la loi de commande (L3 ; L4, L'4 ; L5, L'5) d'ouverture des moyens (6) formant vanne de régulation est une loi de type « créneau » en fonction de l'angle (θ) du vilebrequin du moteur (1).

4. Dispositif selon la revendications 3, **caractérisé en ce que** chaque cylindre du moteur (1) fonctionne selon un cycle de travail à quatre temps et la loi de commande (L3 ; L4, L'4 ; L5, L'5) d'ouverture des moyens (6) formant vanne de régulation est une loi de type « créneau » en fonction de l'angle (θ) du vilebrequin comportant un créneau d'ouverture des moyens formant vanne de régulation (6) au cours de chacune des quatre phases du cycle.

5. Dispositif selon l'une quelconque des revendications précédentes, **caractérisé en ce que** les moyens (6) formant vanne de régulation du débit des gaz d'échappement dans le circuit (C) comprennent un obturateur dont l'ouverture et la fermeture sont commandées par les moyens de commande (7) selon une loi de commande (L3 ; L4, L'4 ; L5, L'5) d'ouverture variable en fonction de l'angle (θ) du vilebrequin du moteur (1) au cours de chaque cycle de travail de chaque cylindre du moteur (1).

6. Dispositif selon la revendication 5, **caractérisé en ce que** les moyens (6) formant vanne de régulation du débit des gaz d'échappement dans le circuit (C) comprennent une vanne, qui est à section variable pour le contrôle de la recirculation des gaz d'échappement mais à section constante au cours de chaque cycle de travail de chaque cylindre du moteur (1),

7. Dispositif selon l'une quelconque des revendications précédentes, **caractérisé en ce que,** pour chaque cylindre du moteur (1), la loi de commande (L3 ; L4, L'4 ; L5, L'5) d'ouverture des moyens (6) formant vanne de régulation est identique d'un cycle de travail du cylindre à un autre.

8. Dispositif selon l'une quelconque des revendications 1 à 5, **caractérisé en ce qu'**il comprend des moyens (D) de phasage de la loi de commande (L4, L'4 ; L5, L'5) d'ouverture des moyens (6) formant vanne de régulation sur le cycle de travail de chaque cylindre du moteur (1).

9. Dispositif selon la revendication 8, **caractérisé en ce que,** pour chaque cylindre du moteur (1), la loi de commande (L4, L'4) d'ouverture des moyens (6) formant vanne de régulation comporte l'ouverture des moyens (6) formant vanne de régulation sur une plage angulaire d'angle du vilebrequin (Δθ₄, Δθ'₄) variable d'un cycle de travail du cylindre à un autre.

10. Dispositif selon l'une quelconque des revendications 8 ou 9, **caractérisé en ce que,** pour chaque cylindre du moteur (1), la loi de commande (L5, L'5) d'ouverture des moyens (6) formant vanne de régulation comporte, au moins pour la phase d'échappement de chaque cycle de travail du cylindre, l'ouverture des moyens (6) formant vanne de régulation pour une première valeur (θₒ, θ'ₒ) de l'angle du vilebrequin (θ) et la fermeture des moyens (6) formant vanne de régulation pour une deuxième valeur (θ_{f}, θ'_{f}) de l'angle du vilebrequin, ces première et deuxième valeurs de l'angle du vilebrequin étant variables d'un cycle de travail du cylindre à un autre.

11. Procédé de recirculation des gaz d'échappement en entrée d'un moteur (1) à combustion interne à allumage par compression équipé d'un turbocompresseur (2), ce moteur étant muni d'un circuit (C) de recirculation des gaz d'échappement en entrée du moteur et de moyens (6) formant vanne de régulation du débit des gaz d'échappement dans le circuit (C), **caractérisé en ce que,** pour chaque cycle de travail de chaque cylindre du moteur, lors de la phase d'échappement du cylindre, il comprend des étapes dans lesquelles :
- on maintient les moyens formant vanne de régulation (6) fermés au début de la phase d'échappement du cylindre ;
- on ouvre les moyens formant vanne de régulation (6) au cours de la remontée du piston du cylindre, pour une position du piston intermédiaire entre le point mort bas (PMB) et le point mort haut (PMH) de sa course.

12. Véhicule automobile, du type comprenant un moteur (1) à combustion interne à allumage par compression équipé d'un turbocompresseur (2), **caractérisé en ce qu'**il comprend un dispositif selon l'une quelconque des revendications 1 à 9 pour la recirculation des gaz d'échappement en entrée du moteur (1).
